# EUROPEAN PATENT SPECIFICATION

(11) **EP 0 194 892 B1**
(45) Date of publication and mention of the grant of the patent: **04.08.1993**
(21) Application number: 86301857.8
(22) Date of filing: 14.03.1986
(51) Int. Cl.: H02H 5/04

(54) **Protected refrigerator compressor motor systems**
Schutzsysteme für einen Kältemaschinenkompressormotor
Systèmes de protection pour un moteur d'un compresseur réfrigérateur

(30) Priority: 15.03.1985 IT 4781885
(43) Date of publication of application: 17.09.1986
(73) Proprietor: TEXAS INSTRUMENTS INCORPORATED, Dallas Texas 75265 (US)
(72) Inventor: De Filippis, Pietro, Aversa (IT); Calenda, Ciro, Parco Cerimele Aversa (IT); Notaro, Giuseppe, Pomigliano D'Arco Napoli (IT); Rotulo, Fabrizio, I-80127 Napoli (IT); Pejouhy, Radi, Marshfield, MA 02050 (US); D'Entremont, John R., Foxboro, MA 02035 (US); Nield, Joseph, Cumberland, R.I. 02864 (US); Beggs, Louis C., Attleboro, MA 02703 (US)
(74) Representative: Abbott, David John

(56) References cited:
- DE-U- 1 940 613
- FR-A- 1 254 240
- FR-A- 2 345 841
- US-A- 4 241 370
- US-A- 4 499 517

## Description

### Background of the Invention

The field of this invention is that of motor protectors and the invention relates more particularly to a refrigerator compressor motor system having inherent motor overload protection and to motor protectors for use in such a system.

Thermostat metal motor protectors adapted to provide what is called inherent motor overload protection are well known. Such protectors are both current and temperature responsive and provide both short time (locked rotor) and ultimate trip (running overload) protection to prevent overheating of motors due either to large, sharp motor overloads of brief duration or to smaller motor overloads of longer duration. In such an inherent motor protector, a dished thermostat metal means is arranged to have selected thermal coupling to an electrical motor when the protector is mounted in its intended position on the motor. The protector also has an electrical resistance heater system which is connected in series with the motor to carry the motor current for heating the thermostat metal means in response to current flowing in the heater system. During normal motor operation as motor current varies within an anticipated normal range, the combined heating effect from thermal coupling to the motor and from the electrical heater system is such that the thermostat metal means remains unactuated to maintain normal motor operation. However, if a fault condition occurs which would result in overheating of the motor so that motor damage could occur, those combined heating effects heat the thermostat metal means to a selected actuating temperature so it moves to an inverted dished configuration with snap action to separate protector contacts and interrupt operation of the motor. If the fault condition is due to a small overload or the like and causes a small increase in motor temperature of substantial duration such as could tend to cause eventual deterioration of motor insulation or the like, the ultimate trip characteristic of the protector governs and the protector is typically actuated in response to the combined heating effect of heat transfer from the motor and from a small overload current in the resistance heater system of the protector, thereby to provide what is called running overload protection for the motor. On the other hand, if a fault condition such as a locked rotor occurs, this results in a large, sharp increase in motor current such as would tend to cause a rapid rise in the motor temperature. In this case the short time trip characteristic of the protector governs and the protector is actuated primarily in response to the increase in motor current in the resistance heater system of the protector to interrupt motor operation before the anticipated overheating of the motor occurs, thereby to provide what is called locked rotor protection for the motor. In the typical inherent motor protector, the thermostat metal means subsequently cools to a relatively lower, reset temperature and returns with snap action to its original dished configuration so that, if the fault condition has been corrected during the off-time provided by the protector, normal running operation of the motor is resumed. However, if the fault condition persists, the protector cycles on and off in the manner described for a sufficient period of time without damage to the motor to permit operator intervention to correct the fault condition. For that purpose, the thermostat metal means used in the protector has desirably had a relatively low reset temperature which was selected to provide an off-time characteristic allowing a period for operator intervention which is consistent with the practical cycle life of electrical contacts and other components in the protector.

As will be understood motor temperature occurring during overheating could exceed the temperature limits of insulation materials used in the motor windings. Protector cycling on and off during the continuation of a fault condition in the motor could exceed the cycle life of electrical contacts or other components used in the protectors. Accordingly specifications for motors and motor protectors are typically prescribed in codes established by testing services and industry associations and by governmental bodies and the like in different countries to assure that the motors and protectors have the properties necessary to meet the requirements of various applications. While different codes establish specifications in different terms, the specifications are typically intended to meet related requirements and therefore tend to have similar features. That is, in successfully applying motor protectors to provide inherent overload protections for specific electrical motors to meet those code requirements, the protectors are usually provided with a selected combination of short time (locked rotor) trip and ultimate (running overload) trip characteristics to achieve the desired protection. In that regard, the desired performance characteristics for inherent motor protectors of a particular manufacturer or group of suppliers may be defined by reference to the short time (locked rotor) trip current necessary for tripping the motor protector within a specified short trip time and by reference to the ultimate trip (running overload) current for tripping the protector assuming the current and heat transfer to the thermostat metal means are stabilized at a selected, constant level. For example, in one widely used motor protector specification, the inherent characteristics of a group of motor protectors available for use in a particular category of commercial applications are defined by reference to the short time trip current for a short trip time of ten (10) seconds and to the stabilized ultimate trip current (usually determined by incrementally increasing the current at intervals of about 15 minutes) where the effective protector ambient (the ambient determined for the thermostat metal means during normal full load running operation of the motor) is taken to be 65^{o}C., those characteristics typically being referenced in more general terms by expressing the characteristic as a ratio of such short time trip and ultimate trip currents. Inherent motor protectors having performance characteristics defined generally within particular ranges in this manner are then applied to specific motors with respect to the rate of temperature rise and the maximum permitted temperatures of the motor windings and the like by the use of bench tests, thereby to selectively match individual protectors to the motors to meet the code requirements for those motors and for providing the desired inherent overload protection for individual motors likely to be encountered.

In order to achieve present day performance requirements for inherent motor protection as above described, the thermostat metal means in the protector has been provided with selected electrical resistance properties and has been incorporated in the motor circuit as part of the resistance heater system of the protector. That is, in providing sufficient heating for the thermostat metal means to actuate the protector under each of the various different motor overload conditions likely to be encountered, it has been found that, because of heat transfer effects, the heat generated directly in a thermostat metal means having selected electrical resistance properties is more promptly effective than heat transferred from the motor or from other resistance heater means for raising the temperature of the thermostat metal means. Further, the heating effect of the resistance in the thermostat metal means has typically been needed for meeting the complex heating patterns required to provide the desired range of motor protection. As a result, the thermostat metal means has had to be connected in the motor circuit and the need for making electrical connection to the thermostat metal actuating means by electrical contacts or supports or the like has meant that the thermal response characteristics initially provided in the dished thermostat metal means had tended to be altered during protector assembly. This in turn has meant that calibration of the protector has usually been required after protector assembly for meeting motor protection requirements. Accordingly such motor protectors have typically had relatively complex and expensive structures and have usually required complex manufacturing and calibration processes. It would be desirable if the advantages of an inherent motor overload protector could be achieved utilizing a relatively less complex and less expensive motor protector device and a more convenient device assembly procedure while still meeting the demanding requirements of today's industry.

In DE-U-1,940,613 and FR-A-1,254,240 there are described thermally operated switches for protecting electric motors in which the motor current passes through an electric resistance heater and the heat so generated falls on a bimetallic snap-action-disc element that is held in the housing close to the heater and which, when it is heated sufficiently, flexes to move a switch contact on the element away from a fixed contact.

### Brief Summary of the Invention

It is an object of this invention to provide a novel and improved inherent motor protector.

According to the present invention there is provided a current and temperature responsive motor protector organized and arranged to be mounted in a particular manner on an electric motor to provide in use short time trip and ultimate trip protection of the motor, the protector comprising: a base, first contact means mounted on the base engaged with complementary contact means when in its normal first position so that in use a supply circuit to the motor is closed, the complementary contact means being movable to a second position to disengage the first contact means to open the supply circuit to the motor, thermostat metal means comprising a dished snap-acting thermostat metal member having an original dished configuration and an inverted dished configuration, the member changing from the original dished configuration to the inverted dished configuration when heated to a precise actuating temperature, and being mounted on the base so as to be disposed to have particular thermal coupling to the motor when the protector is mounted on the motor in the particular manner, and electrical resistance heater means connected so that in use current to the motor passes through it and disposed so that in use it cooperates with the heating of the thermostat metal means by the motor so as to permit the member to remain in its original dished configuration when normal running currents flow in the heater means and to move the thermostat metal member to its inverted dished configuration when either short time trip or ultimate trip fault motor currents flow in the heater means,
characterized in that, the thermostat metal member is mounted on the base, unattached to any support substantially free of externally applied forces and out of a motor circuit so that in use motor current does not flow through the member, at a location relative to the complementary contact means for it to disengage the first contact means if the member is moved to its inverted dished configuration.

A motor protector can provide inherent overload protection for compressor motors as used in home refrigerator appliances. Such a motor protector and system may have a relatively less complex and expensive structure. A series of inherent motor protectors particularly adapted for refrigerator compressor motor systems can be provided wherein characteristics of the protectors in the series differ in selected increments so that protectors selected from the series are adapted for use in providing inherent overload protection for motors in refrigerator compressor systems likely to be encountered in a commercially recognized category such as home refrigerator appliances. Systems with solid state PTC motor starters having resistance switching means of positive temperature coefficient of resistivity may be provided, where the protectors have improved reset times compatible with the reset times of the motor starters.

In this regard, it has now been recognized that protectors used in providing inherent motor overload protection for hermetically sealed refrigerator compressor motors in home refrigerator appliances (home refrigerators and freezers, home dehumidifiers, and refrigerators for water coolers and soft drink vending machines are typically included in this category) typically have short time (locked rotor) trip currents and ultimate (running overload) trip currents as commonly specified above with ratios of such currents in the range from 2.5 to 3.5 for certain motor systems and in the range from 3.5 to 4.5 for the remaining motor systems. That is, the current ratios are found to be in the lower range where the compressor motors are of the type operable at 110 volts requiring current-responsive motor starting using electromechanical motor starting relays or the like and are in the upper range where other starting relay means such as positive temperature coefficient resistance starter relays for split-phase motors or the like operable at 220 volts are used. It has also now been found that where the protector components are arranged in a particular way, such short time trip/ultimate trip current ratios are achieved by a thermostat metal actuator means that is disposed outside the motor winding circuit and where it is adapted to be precisely assembled in the protector to provide the desired inherent overload protection characteristics without requiring calibration of the protector after protector assembly or after incorporation in a refrigerator compressor motor system.

Briefly described, an example of a novel and improved refrigerator compressor motor system having improved inherent motor protection as provided by this invention comprises an electrical motor and a refrigerator compressor operated by the motor hermetically sealed in a common shell, and a current and temperature responsive motor protector providing short time trip and ultimate trip protection for the motor. The systems include electromechanical motor starting relays or resistance starting relays of positive temperature coefficient of resistivity as may be desired. The protector may comprise base means, contact means mounted on the base means for relative movement between positions opening and closing the motor circuit, and thermostat metal means adapted to move from an original dished configuration to an inverted dished configuration with snap action when the thermostat metal means is heated to a selected actuation temperature. The thermostat metal means is adapted to return to its original dished configuration with snap action when it is subsequently cooled to a relatively lower reset temperature. The thermostat metal means is mounted on the base means of the protector to move the contact means between said circuit opening and closing positions in response to movement of the thermostat metal means between said dished configurations. The thermostat metal means is thermally coupled in selected heat-transfer relation to the electrical motor but located outside the motor circuit so motor current is not directed through the thermostat metal means. However resistance heater means responsive to motor current are arranged to transfer selected heat to the thermostat metal means in such a way as to cooperate with the thermal coupling of the thermostat metal means to the motor to provide both short time trip and ultimate trip protection for the motor.

The base means may be of an electrical insulating material of relatively low thermal conductivity and with a recess therein. Preferably a boss of the base material of low thermal conductivity extends up into the recess to provide the base means with additional heat sink capacity. The heater means is disposed within the recess and preferably surrounds the boss of the base material provided in the center of the recess. In some embodiments, heater is preferably formed of a wire material such as nickel having a selected positive temperature coefficient of resistivity. The thermostat metal means comprises a round thermostat metal disc which is disposed in the recess on a recess shoulder to extend over the heater means in close thermal coupling to the heater means to be normally free of externally applied stress within the recess. Tee protector also includes fixed contact means which are mounted on the base means outside the recess and a resilient, movable contact arm which extends over the recess where it is adapted to normally retain the thermostat metal disc in the recess free of applied stress. The movable contact arm normally engages the fixed contact means for closing the motor circuit and the arm is movable by movement of the thermostat disc to its inverted dished configuration to disengage the arm from the fixed contact means to open the motor circuit. The movable contact arm also returns to its circuit closing position when the thermostat disc subsequently cools and snaps back to its original dished configuration. Terminal means electrically connected to the respective fixed and movable contact means extend from the base means for electrically connecting the motor protector in the electrical motor circuit. Preferably the recess in the protector base means has an end which opens at one side of the base, has a recess bottom and a side wall, has a shoulder in the side wall facing the open end of the recess, and has another opening in the recess side wall. That side of the base means also has grooves and reference surfaces formed therein for receiving and accurately positioning the heater means, thermostat metal means, contact means and terminal means of the protector in predetermined relation to each other on the base means.

The heating capacity of the electrical heater means may be regulated with respect to the thermal conductivity and capacity of the thermostat metal disc, the base means and the other protector components for providing the protector with a ratio of short time trip current (for short time of ten seconds) and ultimate trip current (stabilized) in the range from 2.5 to 4.5 where the effective protector ambient temperature is 65^{o}C.. Preferably a series of such motor protectors is provided for use in refrigerator compressor motor systems for home refrigerator appliances to provide both short time trip and ultimate trip protection in such systems as are likely to be encountered, the series preferably having heaters with current ratings in the range from one to ten amperes wherein the current ratings of the individual heaters are separated by increments corresponding to about 5 percent of the current rating of the next lower heater current rating in the series and preferably having thermostat metal disc actuating temperatures in the range from about 90^{o}C. to 160^{o}C. separated in increments of about 5^{o}C.. The thermal capacity of the protectors of the described structure are regulated for providing reset times for some of the protectors in a range the upper limit of which is at least greater than about 150 seconds for permitting use of the protectors in refrigerator compressor motor systems utilizing motor starters having resistance switching means of positive temperature coefficient of resistivity to be compatible with the reset times of such starters.

In this arrangement, the protector bases, contacts, terminals, heaters and thermostat metal disc means are adapted for easy manufacture and assembly. The thermostat metal disc is not required to display any selected electrical resistivity and does not require any wide differential between its actuating and reset temperatures so it is easily manufactured to display precisely predetermined thermal response characteristics when it is free of externally applied forces. When the thermostat metal disc is then assembled in the protector, it does not have to be welded, clamped or pig tailed in any electrical circuit and is accordingly mounted on the protector base free of such externally applied forces wherein it is adapted to display those precisely predetermined thermal response characteristics for opening and closing the motor circuit. Because the thermostat metal disc is not connected in the motor circuit, it is adapted to be disposed in close thermal coupling to a separate electrical resistance heater means and to be closely accommodated between the heater means and a resilient contact arm which is series connected with the heater means and at the same polarity as the heater means, thereby to move the contact arm between positions opening and closing the motor circuit without requiring heavy motion transfer means or the like. In that way, the thermostat metal disc is easily proportioned and thermally coupled relative to the motor and to the separate heater means to provide short time trip to ultimate trip current ratios in the range from 2.3 to 4.5 to meet the stringent requirements for use in refrigerator compressor motor systems for home refrigerator appliances and the like. The protectors are also adapted to display reset times in such motor systems which are compatible with use of the newer resistance types of motor starting relays having resistance switching means of positive temperature coefficient of resistivity which require significant periods of time for reset during system cycling while a fault condition persists. In addition, where the resilient contact arm in the protector is not subjected to creep type movement during heating and cooling of the thermostat metal means at temperatures below the actuating temperatures thereof, the resilience of the contact arm is easily selected to provide accurately predetermined contact pressures in the protector for achieving improved protector service life. Further the structure of the protector is adapted for precise accurate and inexpensive assembly for achieving the high quality standards required by today's industry.

### Description of the Drawings

Other objects, advantages and specific features of the novel and improved motor protector and compressor motor system of this invention appear in the following detail description of preferred embodiments of the invention, the detailed description referring to the drawings in which:
Fig. 1 is a diagrammatic side elevation view of a refrigerator compressor motor system according to this invention;
Fig. 2 is a schematic view illustrating electrical connection of components in the refrigerator compressor motor system of Fig. 1;
Fig. 3 is a partial side elevation view of the system of Fig. 1 as viewed along line 3-3 of Fig. 1 including a plan view of the protector incorporated in the system;
Fig. 4 is a side elevation view of the protector of Fig. 3 illustrating the protector as viewed along line 4-4 of Fig. 1;
Fig. 5 is a partial plan view similar to Fig. 4 illustrating the base of the protector or Fig. 4 with other protector components removed;
Fig. 6 is a partial plan view similar to Fig. 5 to enlarged scale illustrating mounting of some protector components in the base of Fig. 5;
Fig. 7 is a partial plan view similar to Fig. 6 illustrating mounting of other protector components in the structure illustrated in Fig. 6;
Fig. 8 is a section view along line 8-8 of Fig. 7;
Fig. 9 is a partial plan view similar to Fig. 5 illustrating the base of an alternate embodiment of the protector of this invention; and
Fig. 10 is a partial plan view similar to Fig. 6 illustrating mounting of some protector components in another alternate embodiment of the protector of this invention.

### Description of the Preferred Embodiments

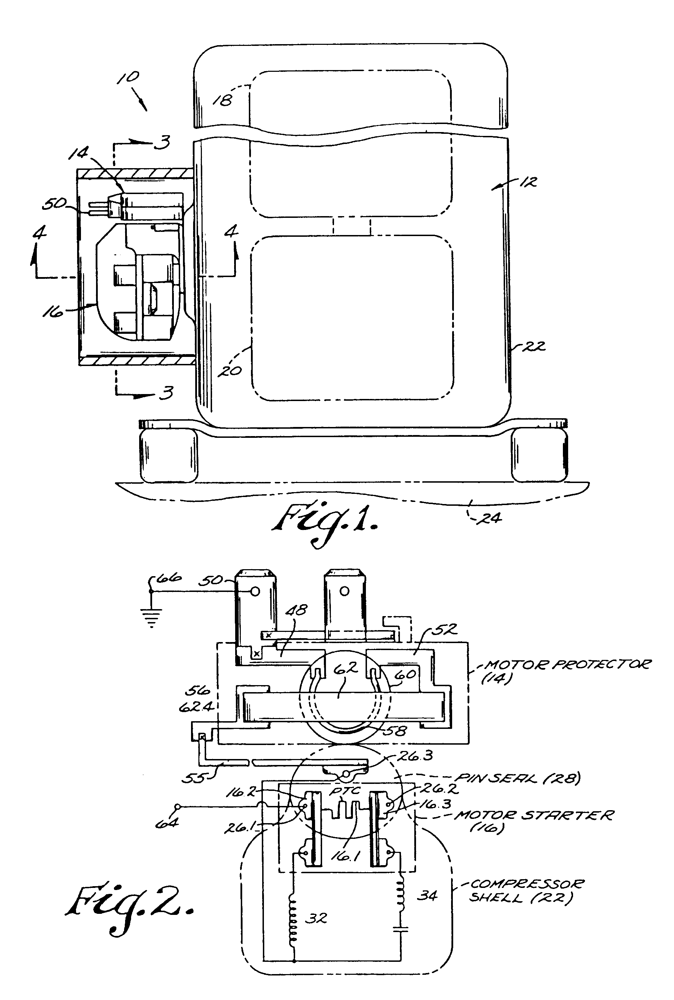

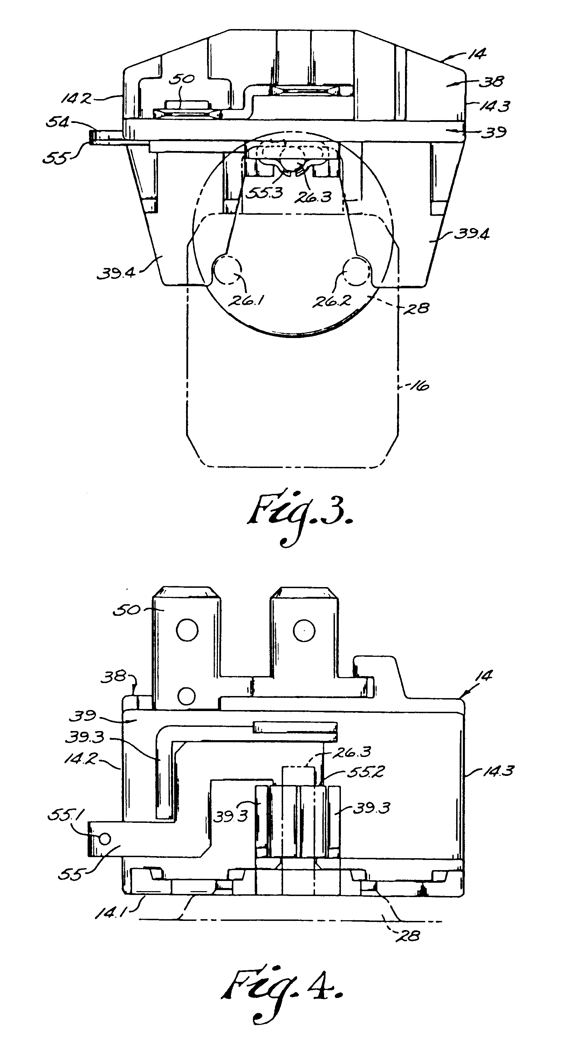

Referring to the drawings, 10 in Figs. 1-4 indicates a refrigerator compressor motor system which is shown to include a conventional sealed compressor unit 12, a motor protector 14 as provided by this invention, and a conventional PTC motor starting means 16. The sealed compressor unit incorporates a conventional electrical motor 18 and a refrigerator compressor 20 operated by the motor which are hermetically sealed in a common metal shell 22. The unit is mounted in any conventional manner in any home refrigerator appliance (as defined above) for example as is diagrammatically illustrated at 24 in Fig. 1. Thermally and electrically conductive lead-through pins 26.1, 26.2 and 26.3 are electrically insulated from the shell and from each other by glass seal means 28 or the like to extend in sealed relation through the shell to make electrical connection to the windings of the electrical motor in the shell. Typically the motor includes a main winding 32 and a start winding 34 which are connected at one end to the respective pins 26.1, 26.2 and which are connected in common at their opposite ends to the pin 26.3 as is schematically shown in Fig. 2. The motor starting means 16 is is of any conventional type but in one preferred embodiment discussed further below comprises a solid state motor starter having resistance switching means 16.1 of a positive temperature coefficient of resistivity (PTC). As such a motor starter is described in U.S. Patent No. 4,241,370 incorporated herein by this reference, that starter is not further described herein and it will be understood that any conventional solid state or electromechanical motor starting relay is used in the system 10 within the scope of this invention. The motor protector 14 provides inherent motor overload protection for the motor 18 and for that purpose is mounted on the lead-through pin 26.3 in the illustrated manner to be disposed in selected thermally coupled relation to the motor 18 as is described in U.S. Patent Application Serial No. 551,619 filed November 14, 1983 and as is further described below.

The refrigerator compressor motor system 10 preferably incorporates a fractional horsepower motor 18, motors with ratings in the range from 1/20 to 1/3 horsepower being typically used in home refrigerator appliances. The protector 14 is adapted to provide inherent motor overload protection to protect against overheating under either short time trip or ultimate trip motor fault conditions as specified for example in Table I:

**Table I**

| Type of Protector | Maximum Compressor Shell Temperature Spread Thin Over Thin Area |
|---|---|
| Automatically Reset | 150^{o}C. |

A. Application to d.c. and a.c. single phase motors rated at 1 HP or less at 110-115 or 220-230v.
B. Performance tests pursuant to Underwriter's Laboratory Standard UL 984 dated June 13, 1984.
C. The protector shall operate for 15 days on locked rotor endurance test with the motor with which it is to be applied without exceeding the above-noted shell temperature and without permanent injury to the motor.

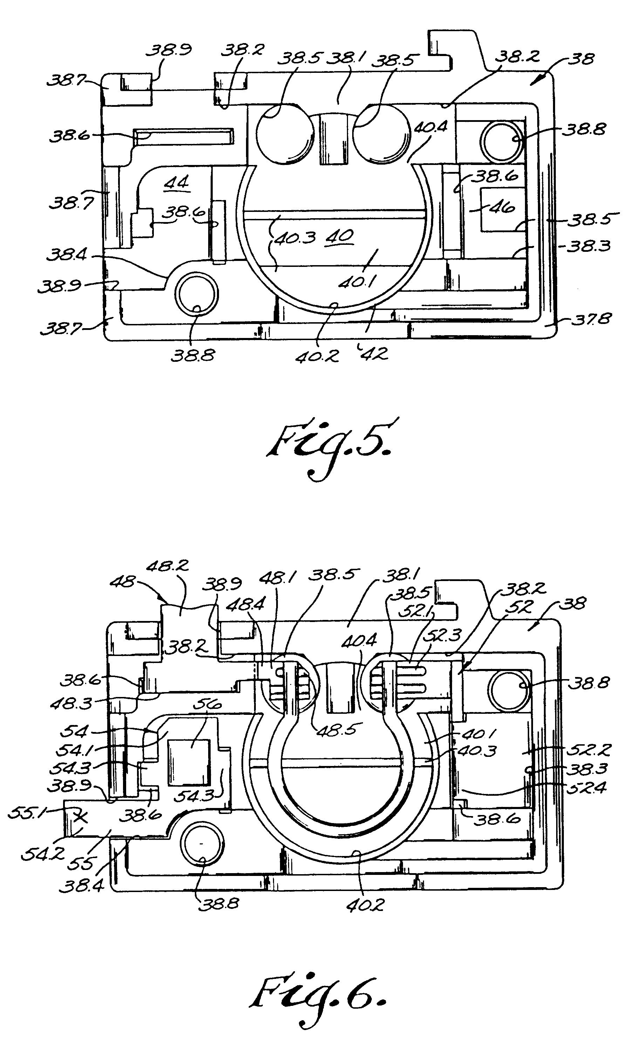

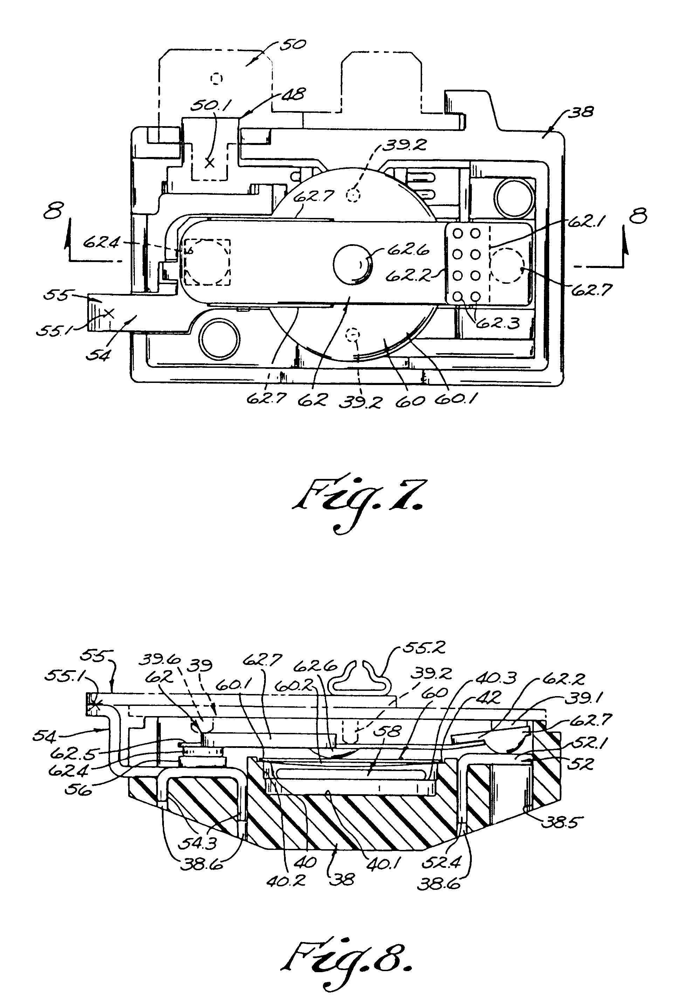

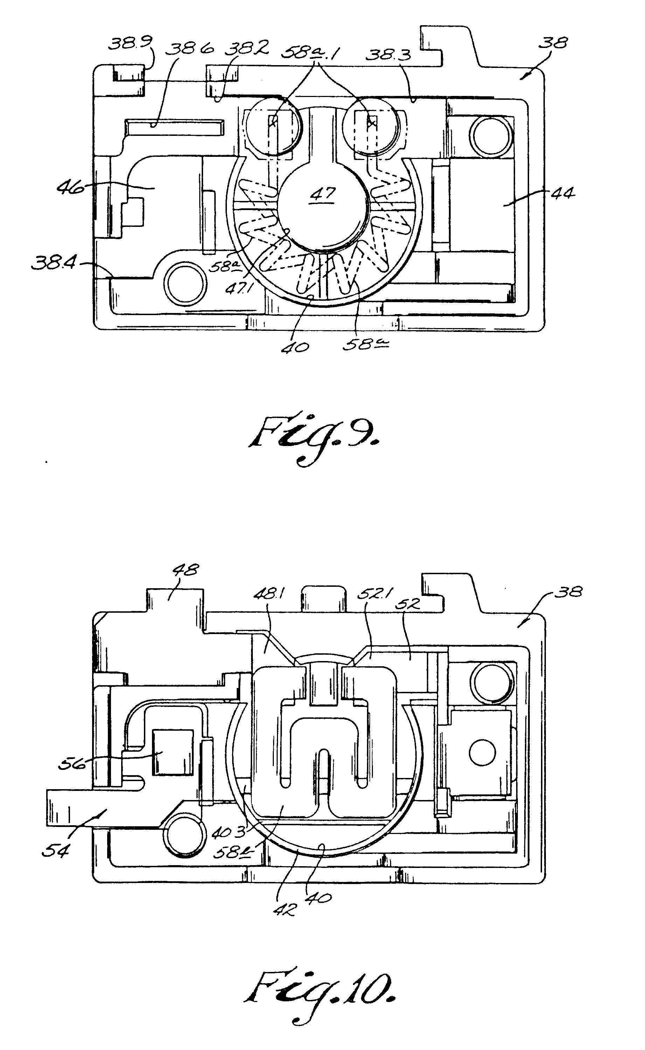

In the preferred embodiment of this invention, the motor protector 14 includes a housing 15 comprising a base or body 38 and a cover 39 which are molded or otherwise formed of an electrically-insulating, glass-filled nylon material or the like having a relatively low thermal conductivity. See Figs. 1-4. Thermally and current responsive switching means are disposed within the housing and the housing is particularly adapted for mounting on a refrigerator compressor unit with any conventional starting means 16 being used in the system in the manner described in the patent application noted above. The base has a recess 40 opening at one side 38.1 of the base as shown in Fig. 5. The recess has has a bottom 40.1 and a side wall 40.2 and a shoulder 42 in the side wall faces the open end of the recess. A first reference surface 44 is located on the base side 38.1 at one side of the recess and a second reference 46 is located on the same base side at the opposite side of the recess. If desired, ridges 40.3 form locating surfaces on the recess bottom. An opening 40.4 in the recess side wall communicates with a groove or channel 38.2 formed in the base side 38.1 and preferably additional grooves 38.3, 38.4 are located in predetermined relation to each other and to the recess 40. Preferably access openings 38.5 are located in the groove 38.2 near the recess side wall opening 40.4 and in the reference surface 46 while conductor mounting and locating holes 38.6 are provided in the groove 38.2 and in the reference surfaces 44 and 46. Preferably a ridge 38.7 extends around part of the base perimeter to cooperate with a corresponding ridge (not shown) on the cover 39 to facilitate mounting of the cover and, if desired, locating pins 39.1 on the cover (one is shown in Fig. 8) fit into locating holes 38.8 in the base. Slots 38.9 in the base ridge communicate with the grooves 38.2 and 38.4 In an alternate embodiment illustrated in Fig. 9 (wherein corresponding features are identified with corresponding numerals), a boss 47 of the base material is formed, preferably integral with the base by molding or the like, in the center of the recess bottom upstanding from the bottom so the boss periphery 47.1 is spaced from the recess side wall 40.2 and so that the boss increases the thermal capacity of the base at a location within the base recess. In that construction, the base or body 38 is easily formed by molding or the like and where the recess, recess shoulder, reference surfaces and grooves and the like are all formed in the same base side they are easily formed in precisely predetermined locations relative to each other.

As shown in Fig. 6, a first electrical conductor member 48 of cold roll steel or the like is disposed in the groove 38.2 with one end 48.1 extending over an access opening 38.5 near the recess side wall opening 40.4 and with its opposite, terminal end 48.2 extending from the groove through a slot 38.9. A tab 48.3 is fitted into a terminal locating hole 38.6 and is staked (bent or bifurcated or the like in conventional manner) in the hole for securing the conductor member 48 in a selected location in the groove. Preferably the member has a portion 48.4 of limited cross section selected for limiting heat-transfer through the member and that portion is preferably bent to accommodate it in the groove 38.2 as shown. An exterior terminal 50 is preferably welded to the terminal end 48.2 as indicated at 50.1 in Fig. 7 and weld projections such as ribs 48.5 are preferably provided on the member end 48.1. A second electrical conductor member 52 is also disposed in part of groove 38.2 with one end 52.1 extending over a corresponding access opening 38.5 near the recess side wall opening 40.4 and with its opposite end 52.2 extending into the groove 38.3 over the reference surface 46 and over the window 38.5 in that reference surface. This conductor member has weld projections 52.3 at said one end and has a tab 52.4 fitted into and staked in a mounting hole 38.6 for securing the conductor member on the base 38. A third electrical conductor member 54 is disposed in the groove 38.3 with one end 54.1 disposed over the reference surface 44 and with an opposite, terminal end 54.2 extending from the groove through a slot 38.9. A pair of taps 54.3 fit into and are staked within mounting holes 38.6 for securing the conductor member to the base. An exterior terminal 55 is preferably welded to the terminal end 54.2 after mounting of the cover 39 as indicated at 55.1 in Figs. 2 and 4. Preferably the conductor member 54 has a substantial cross sectional size extending out through the slot 38.9 as illustrated for providing the member with substantial thermal conductivity as will be discussed below. In that construction, the conductor members are easily mounted on the base 38 and are precisely located relative to the base and each other by the grooves, reference surfaces and mounting holes.

In accordance with the invention, a first or stationary electrical contact 56 is electrically connected to the conductor member 54, preferably by being soldered, brazed or welded to the member to be located at a precisely predetermined position on the base 38 outside the recess 40 at one side of the recess as determined by the reference surface 44, the groove 38.3, and the locating holes 38.6.

An electrical resistance heating means is disposed in the recess 40 located on the recess bottom against the locating surfaces 40.3. Preferably the heating means comprises a loop of nichrome or other electrical resistance heating wire or the like which is arranged to extend around the circumference of the recess 40 so that opposite ends of the loop extend over the ends 48.1, and 52.1 of electrical conductors, the heater ends preferably being resistance welded to the respective conductor member ends by means of the weld projections 48.5 and 52.3 where access to the members and heater ends for making the welds is obtained using the access openings 38.5. In one preferred embodiment of the invention discussed further below, the heater wire 58 is formed of nickel and has a positive temperature coefficient of resistivity such that the resistance of the material increases up to about six times as the temperature of the wire is increased by self-heating or the like. In an alternate embodiment of the invention as illustrated in Fig. 9, the heater wire is wound in an helical coil 58 a and that coil is looped around the boss 47 provided on the base in close heat-transfer relation to that boss, the boss and coil preferably being proportioned as shown so that the coil fits snugly around the boss and tends to be retained in position on the recess bottom by the boss. In alternate embodiments of the invention, the heater means 58 is also adapted to be connected to the conductor member ends by laser welds as indicated at 58a.1 in Fig. 9. In another alternate embodiment of this invention as illustrated in Fig. 10 (wherein corresponding features are identified by corresponding reference numerals), the heater means 58b is blanked from a sheet of electrical resistance material to be looped within the base recess 40.

As shown in Figs. 7 and 8, a thermostat metal disc member 60 is disposed in the base recess with the disc perimeter 60.1 resting on the recess shoulder 42 so the disc extends over the heater 58 in closely spaced and predetermined thermally coupled relation to the heater. The thermostat disc preferably comprises a round dished member of a multilayer thermostat metal which is normally disposed in the recess 40 in an original, concavo-convex dished configuration with a convex side 60.2 of the disc facing toward the heater as illustrated in Fig. 8 but which is adapted to move to an inverted dished configuration with snap action when the disc is heated to a precisely predetermined actuating temperature while the disc is substantially free of externally applied forces. The thermostat metal disc is also adapted to return its original dished configuration with snap action when the disc is subsequently cooled to a relatively lower reset temperature. As illustrated, the thermostat disc is disposed in the recess to be normally free of externally applied forces so it is adapted to be actuated when heated to that precisely predetermined actuating temperature.

In preferred embodiments of the invention the heater is arranged to apply heat more directly to the thermostat 60 at a location at or near the perimeter of the disc preferably at a location extending around at least a major portion of the disc circumference while avoiding application of its more intense heating effect to the center of the disc. In that way, heating of the disc to its "actuating temperature" actually produces a small temperature differential across the disc but assures that the differential tends to enhance snap acting movement of the disc while tending to reduce such internal stresses in the central portion of the disc which tend to produce substantial drift in the thermal response characteristic of the disc. That is, where the heater is formed of a wire 58 of round cross section as in Fig. 2, or comprises a coil as in Fig. 9, or is formed from a flat sheet material as in Fig. 10, it is found to be advantageous in achieving reliable performance to arrange the heater relative to the disc in the manner illustrated in Fig. 2, for example, where the heater 58 is spaced relatively close to the disc around at least a major part of a circumferential portion of the disc 60 while being spaced at a relatively much greater distance from the central portion of the disc for providing some temperature differential between the central and circumferential portions of the disc with the central disc temperature being relatively lower as the disc is heated to a level at which it is actuated to produce snap acting rovement of the disc as noted above. In that arrangement, the disc is adapted to provide more reliable thermal response than if the central portion of the disc were subjected to relatively higher temperature than circumferential portions of the disc.

A resilient, electrically conductive, movable contact arm 62 is arranged with one end 62.1 mounted at an opposite side of the base recess 40 so that the arm extends across the open end of the recess and beyond the recess to normally engage the first or complementary stationary contact 56 located outside the base recess. Preferably for example the movable contact arm 62 is formed of a copper spring material or the like adapted to provide a relatively low spring rate, a weld slug or plate 62.2 is secured to the arm end 62.1 by a plurality of resistance weld projections 62.3 or the like, a movable electrical contact 62.4 is secured to the arm at an opposite end 62.5 of the arm, a protuberance or dimple 62.6 is provided in the arm intermediate its ends, and stiffening ribs 62.7 are raised from the arm along the length of the arm between the dimple 62.6 and the movable contact arm end 62.5. The arm is then welded to the electrical conductor 52 by use of a resistance weld projection 62.7 or the like as shown in Fig. 8 so that the dimple 62.6 faces the thermostat disc 60 but does not normally assert any externally applied force on the thermostat disc. The access window 38.5 facilitates forming the weld at 62.7 and a laser weld can be used if preferred. In that arrangement, the contact arm is precisely located to extend over the thermostat disc to engage the movable contact 62.4 with the complementary contact 56 in a closed circuit position and the dimple is precisely located relative to the disc within the recess. The contact pressure between the contacts 62.4 and 56 is easily adjusted by applying an adjusting, bending force to the conductor 52 through the access window 38.5 in the reference surface 46 and, because the arm has a low spring rate and does not normally apply any force to the disc, this contact pressure adjustment is easily made to achieve high contact closing pressures if desired without risk of altering the thermal actuating temperature characteristics of the thermostat disc. The noted location of the stiffening ribs 62.7 assures that undesired flexing of the arm is avoided between the dimple and the movable contact 62.4. As noted, the arm 62 is precisely located relative to the disc 60 and the disc is precisely located relative to the heater by the described structure and the heater and contact arm are electrically connected in series relation to be at the same electrical polarity. Accordingly the disc and heater are easily accommodated in the recess under the arm to be in close relation to achieve desired thermal coupling and to permit the disc to reliably engage the dimple to move the arm to an open circuit position separating the contact 62.4 and 56 when the disc is actuated to move to its inverted dished configuration. Where the heater is a sheet material as shown in Fig. 10 its spacing to the thermostat disc is very small for achieving very effective heat transfer even though the heater rating is viewed by substituting a heater of different serpentine length, that close spacing is reliably retained. As will be seen the position of the arm 62 over the recess also serves to retain or capture the thermostat disc in the recess to retain it in the desired close thermal coupling to the heater 58.

In a preferred embodiment of the invention, the cover 39 is cemented or otherwise secured to the base 38 using the ridge 38.7 and the pins 39.1 in locating holes 38.8 and the like. Preferably additional cover pins 39.2 (see Figs. 7 and 8) depend down from the cover into the base recess at respective sides of the contact arm 62 to terminate adjacent peripheral portions of the thermostat disc, thereby to retain the disc in an even more precise thermal coupling and position relative to the heater 58 and arm 62 without normally asserting any externally applied forces on the disc. If desired an additional cover pin 39.6 is arranged to depend down to a position in selected spaced relation over the end of the contact arm 62 carrying the movable contact 62.4 to serve as a stop for limiting movement of the arm in opening the motor circuit, thereby to eliminate bouncing of the arm after opening the circuit.

As is best shown in Fig. 4, ridges 39.3 are also preferably provided on the outer side of the cover to define a channel or groove for positioning, supporting and thermally isolating the exterior terminal 55 on the cover outside the cover. As shown, the exterior terminal 55 has a resilient female compression clip 55.2 arranged at one end so the axis of the female clip extends from the top to the bottom of the protector 14 (as viewed in Fig. 4). The clip is therefore adapted to be received axially over the lead-through pin 26.3 for securely gripping the pin to mount the protector 14 with selected thermal coupling to the electrical motor 18 via the terminal 55 and conductor member 54 and with selected spacing from the compressor unit shell 22 as proposed in the patent application noted above. The protector cover 39 also preferably has thin tab means 39.4 which are molded integral with the cover of the electrical and thermal insulating material of the cover, which extends from the cover adjacent a bottom edge 14.1 of the protector (see Fig.4) to extend toward and abut the other lead-through pins 26.1, 26.2 for preventing rotation of the protector on the pin 26.3 and for cooperating with the pin 26.3 in locating the protector in a precisely predetermined position on the compressor unit where it will have a precisely predetermined thermal coupling to the compressor motor 18. Preferably the tab means comprises a pair of tabs spaced from each other at respective ends 14.2 14.3 of the protector to engage portions of the pins 26.1, 26.2 facing away from each other. In that arrangement, the tabs are adapted to be more universally accommodated under motor starting means 16 of various different designs where the position of the starting means over the tabs assures retention of the protector on the compressor while also tending to minimize the thermal effect such tabs may have with respect to the motor starting means and the like relative to the compressor unit. Preferably the distal ends of the tabs having guide grooves 39.6 formed in the respective tab means in facing relation to each other facing generally away from the housing for slidably engaging the respective lead-trhough pins 26.1, 26.2 as shown in Fig. 3. In that arrangement it is found that, when mounting the protector on the pins 26.3 where that pin may not be visible to the person mounting the protector, the guide grooves 39.6 are easily positioned slidably against the pins 26.1, 26.2 and serve to guide the female clip 55.2 smoothly and assuredly onto the pin 26.3 for facilitating mounting of the protector for mounting the starter over the protector cover tabs 39.4 and over the end of the pin 26.3 for securing the protector in a precise location on the compressor unit. One starter terminal 16.3 is electrically connected to a power source schematically illustrated at 64 in Fig. 2 while one extension 50.2 of the double, exterior terminal 50 is connected to electrical ground as illustrated at 66 in Fig. 2. In that arrangement, the initial motor circuit extends through the pin 26.1 to the main winding 32 and through the pin 26.2 and starter resistance 16.1 to the start winding 34, the opposite ends of those windings being connected to the pin 26.3. The motor circuit then extends through exterior terminal 55, conductor 54, first contact 56, movable contact 62.4, contact arm 62, conductor 52, heater 58, conductor 48 and exterior protector terminal 50 to electrical ground for energizing the motor windings 32 and 34 to start the motor.

As motor starting occurs, the starter resistance sharply increases and effectively deenergizes the start winding 34 and also provides protection against overloading of the start winding as will be understood. If no motor fault condition occurs, the normal motor currents in the winding 32 are directed through the protector heater 58 and the protector circuit remains closed, the heater being proportioned so that the combined heating effect of such currents in the heater and of thermal coupling of the protector to the motor is insufficient to heat the thermostat metal disc to its actuating temperature for opening the protector circuit. However if selected overheating of the motor should occur or if a fault condition in the motor or compressor unit should result in a selected overload current being directed through the heater 58, the combined heating effect of the heater and the thermal coupling of the protector to the motor heats the thermostat disc to its actuating temperature and opens the protector circuit to deenergize the motor and protect against overheating. That is, if an ultimate trip motor fault condition occurs, a small increase in motor temperature and relatively small overload current being directed through the heater 58 cooperate over a substantial period of time until the thermostat disc is heated to its actuating temperature for deenergizing the motor. Alternately if a short time trip motor fault condition such as a locked rotor condition should occur, a sharp increase in current is directed through the heater 58 and cooperates with the thermal coupling to the motor to deenergize the motor before heating damage can occur to the motor. On deenergizing of the motor, energizing of the heater is also interrupted but the heater material and other protector components retain a substantial amount of heat within the protector for substantial period of time for retaining a thermostat metal disc above its reset temperature for a substantial period of time even if the reset temperature has been selected to be somewhat high to facilitate manufacture of the disc or the like. Where the protector base has a boss 47 located within the base recess as shown in Fig. 9, heat transfer from the boss to the disc 60 continues for an even more substantial period of time after the heater 58 is deenergized. Then when the disc cools to its reset temperature it returns to its original dished configuration with snap action permitting the arm 62 to resiliently return into closed circuit position for reenergizing the motor. In this way, the motor protector is adapted to cycle the motor on and off for a substantial period of time to protect the motor against damage due to overheating while permitting time for operator intervention to correct any motor fault condition which may exist. In accordance with this invention, the components of the motor protector as thus constructed are particularly adapted to be regulated relative to each other for providing a series of motor protectors having thermal response and reset characteristics such that individual protectors selected from the series are adapted to be used for providing protection for any electrical motor likely to be encountered within a particular group or category of electrical motor applications. That is, the heating capacity of the heaters are regulated with respect to thermal capacity of the protector components and the actuating and reset temperatures of the disc 60 to provide the protectors with selected thermal response and reset characteristics. Preferably for example, the heaters 58 used in the protectors in the series have current ratings arranged from about one to ten amperes with the current ratings of the respective protectors in the series separated from each other by increments corresponding to about 5 percent of the heater current rating of the protector with the next lowest heater current rating in the series. The thermostat metal disc members in the series have actuating temperatures in the range from about 90 to 160^{o}C. separated from each other by increments of about 5^{o}C. or the like. Preferably the discs have reset temperatures not less than about 52^{o}C.. The proportions of the protector components are then regulated relative to each other and to the selected thermal coupling to the motor to provide each protector with a ratio of short time trip current to ultimate trip current for a short trip time of ten seconds in the range from 2.3 to 4.5 where the effective protector ambient is 65^{o}C.. Preferably the protector series includes one group having such a ratio in the range from 2.3 to 3.5 for use with 110-115 volt motors using electromechanical motor starting relays and another group in the range from 3.5 to 4.5 for use with 220-230 volt motors using solid state PTC resistance switch motor starting relays. Preferably the protector components are regulated to provide reset times after short time tripping in the range from abut 30 to 150 or more seconds. As thus provided, the series or motor protectors is adapted to provide inherent motor overload protection including both ultimate trip and short time trip protection for any motors likely to be encountered in refrigerator compressor motor systems used in home refrigerator appliances. Alternately the proportions of the protectors are regulated for use in other motor protector appliances as may be desired.

Where the motor starting means 16 comprises a solid state motor starter having resistance switching means 16.1 of positive temperature coefficient resistivity as previously described, the proportions of the protector components are preferably regulated as described so that the protectors have reset times of at least about 150 seconds duration or the like to exceed the reset times of such starter as are likely to be encountered in the intended motor application category.

Alternately, where the heater 58 is formed of a nickel material or the like having a positive temperature coefficient of resistivity as above described, the heater resistance increases in proportion to the increase in motor current and is particularly adapted for achieving short trip times. In that regard, the heater proportions are preferably selected with respect to such temperature coefficient characteristics to display a first relatively low electrical resistance when a normal motor running current is directed through the heater, to display a second relatively higher electrical resistance in response to a relatively higher ultimate trip current being directed through the heater, and to display a third substantially much higher electrical resistance when a sharply increased, short time trip current is directed through the heater, those heater proportions being selected with respect to the thermal coupling to the motor to facilitate matching of the protector characteristics to selected motors to be used with protectors for providing short time trip and ultimate trip protection for the motors. Such PTC nickel wire heaters are particularly useful in providing motor protectors of this structure having the relatively low short time trip/ultimate trip current ratios on the order of about 2.3 and for achieving short time trip times of substantially less than 10 seconds or even in the order of abut 3 seconds as applied to particular motors.

It should be understood that although particular embodiments of the systems and protectors of this invention are described for illustrating the invention, the invention includes all modifications and equivalents of the disclosed embodiments falling within the scope of the appended claims.

## Claims

1. A current and temperature responsive motor protector organised and arranged to be mounted in a particular manner on an electric motor (18) to provide in use short time trip and ultimate trip protection of the motor, the protector comprising: a base (38), first contact means (56,54) mounted on the base engaged with complementary contact means (62) when in its normal first position so that in use a supply circuit to the motor is closed, the complementary contact means being movable to a second position to disengage the first contact means to open the supply circuit to the motor, thermostat metal means (60) comprising a dished snap-acting thermostat metal member having an original dished configuration and an inverted dished configuration, the member changing from the original dished configuration to the inverted dished configuration when heated to a precise actuating temperature, and being mounted on the base so as to be disposed to have particular thermal coupling to the motor when the protector is mounted on the motor in the particular manner, and electrical resistance heater means (58) connected so that in use current to the motor passes through it and disposed so that in use it cooperates with the heating of the thermostat metal means by the motor so as to permit the member (60) to remain in its original dished configuration when normal running currents flow in the heater means and to move the thermostat metal member to its inverted dished configuration when either short time trip or ultimate trip fault motor currents flow in the heater means (58), characterized in that, the thermostat metal member is mounted on the base, unattached to any support substantially free of externally applied forces and out of a motor circuit so that in use motor current does not flow through the member, at a location relative to the complementary contact means (62) for it to disengage the first contact means (54,56) if the member is moved to its inverted dished configuration..

2. A motor protector according to claim 1 wherein the base (38) comprises a body of thermally and electrically insulating material having a recess (40) open at one end, the heater means (58) and thermostat metal member (60) are arranged in closely spaced thermally coupled relation to each other within the recess (40).

3. A motor protector according to claim 2 wherein the complementary contact means (62) comprises a resilient electrically-conductive movable contact arm (62) electrically connected in series to the heater means (58) at the same polarity as the heater means, the arm (62) having one end secured to the body at one side of the recess (40) and having its opposite end extending across the open recess end to an opposite side of the recess, and the first contact means (54,56) is mounted on the body at said opposite side of the recess normally engaging the movable contact, the first contact means (54,56) being mounted outside the recess (40) at a location having proper electrical spacing from the heater means (58) to be of opposite polarity to the heater means, the arm (62) being disposed at a location sufficiently close to the thermostat metal member (60) in the recess (40) to hold the arm (62) extending across the recess disengaged from the first contact means (54,56) when the member is in its inverted dished configuration.

4. A motor protector according to claim 3 wherein the spring arm (62) has a selected relatively low spring rate characteristic.

5. A motor protector according to claim 3 or 4 further characterized in that the contact arm (62) has a protuberance (62.6) intermediate its ends at a location to be engaged by the thermostat metal member (60) when the member is in its inverted dished configuration and has a stiffening rib (62.7) upstanding therefrom between the protuberance and the opposite arm end.

6. A motor protector according to claim 3 or claim 4 or claim 5 wherein the heater means (58) comprises an electrical resistance heater element having terminal means at opposite ends thereof connected to the movable contact arm (62) and to the motor circuit respectively, the heater means (58) having a loop shape and being arranged within the recess (40) extending around the recess in closely spaced heat-transfer relation to the thermostat metal member (60).

7. A motor protector according to claim 6 wherein at least one of said heater terminal means (55) has resilient lead-gripping means (55.2).

8. A motor protector according to claims 6 or 7 wherein the body recess (40) opens at one side of the body, the recess having a bottom (40.1) and a side wall and having a shoulder (42) in the side wall facing the open end of the recess, and the body has first and second reference surfaces (44,46) in said one body side at respective opposite sides of the body recess, the heater means being mounted in a selected position in the recess on the recess bottom, the thermostat metal member (60) being disposed on the shoulder (42) extending over the heater means (58) in thermal coupling relation to the heater means, and the first and complementary contact means are mounted on said first and second reference surfaces respectively in predetermined relation to each other and to the thermostat metal member in the body recess.

9. A motor protector according to claim 8 wherein the recess (40) has a bottom and side wall means and the heater element (58) comprises a wire of metal material of selected electrical resistance properties wound in a helical coil (58a) of selected length.

10. A motor protector according to claim 8 or claim 9 wherein the body (38) has a boss (47) of body material upstanding from the centre of the recess bottom inside the heater loop in thermally coupled relation to the heater means and to the thermostat metal member (60), the boss extending snugly within the heater loop retaining it in a selected position on the recess bottom.

11. A motor protector according to claim 8 wherein the heater means (58) comprises a serpentine length (58b) of a flat sheet of electrical resistance material disposed with a flat side thereof extending over the bottom of the body recess in precisely predetermined electrical spacing to the thermostat metal member arranged in the recess.

12. A motor protector according to any one of claims 3 to 11 wherein the movable contact arm (62) across the open recess end normally retains the thermostat metal member (60) in the body recess substantially free of externally applied forces in said selected thermal coupling to the heater means (58) in the recess.

13. A motor protector according to any one of claims 3 to 12 having a cover (39) of a thermally and electrically insulating material secured to the body over the recess.

14. A motor protector according to claim 13 further characterized in that the cover (39) extending over the body recess (40) also extends over said movable contact arm (62), the cover (39) having a protuberance (39.6) depending toward said opposite arm end at a location to be in selected spaced relation to the opposite arm end when engaged with the first contact and to engage the opposite arm end for limiting arm movement when disengaged from the first contact.

15. A motor protector according to claim 14 in which the cover (39) has a pair of protuberances (39.2) depending therefrom into the body recess on respective opposite sides of the contact arm disposed adjacent respective peripheral portions of the thermostat metal member (60) to securely retain the member in the body recess.

16. A motor protector according to any one of the preceding claims wherein the heater (58) has selected heating capacity and thermal coupling to the thermostat metal member (60) to cooperate with thermal coupling to the motor provided by said mounting to provide the protector with a ratio of short time trip current to ultimate trip current for a short time trip of 10 seconds in the range from 2.5 to 4.5 when the effective protector ambient temperature is 65 °C.

17. A motor protector as set forth in claim 16 wherein its thermal capacity provides the protector with a reset time following tripping in response to the occurrence of short time trip motor fault current in the heater of at least about 150 seconds.

18. A motor protector according to claim 17 wherein the thermal capacity of the protector is regulated with respect to thermal coupling of the thermostat metal member (60) to said heater means (58) to provide the protector with short trip times in the range from 3 to 10 seconds in response to short time trip motor fault currents in the heater element in selected motor applications.

19. A motor protector according to any one of the preceding claims wherein the electrical resistance heater means (58) is formed of a material having a positive temperature coefficient of resistivity, the material of the heater means being selected to display a first electrical resistance in response to normal motor currents in the heater means, a second relatively higher electrical resistance in response to ultimate trip motor current in the heater means, and a third substantially higher electrical resistance in response to short time trip motor current in the heater means, the heater means being proportioned and arranged at a location having selected thermal coupling to the thermostat metal means to display said first resistance when normal motor currents flow in the heater means, to display said second resistance when ultimate trip currents flow in the heater means, and to display said third resistance when short time trip current flows in the heater means.

20. A motor protector according to any one of claims 2 to 15 wherein
the body recess (40) has an opening (40.4) in the side wall thereof,
a first electrical conductor member (48) is mounted on the body having one end disposed adjacent the recess side wall opening and having an opposite terminal end extending from the body,
a second electrical conductor member (52) is mounted on the body having one end disposed adjacent the recess side wall opening spaced from the first conductor member and having an opposite end connected to one end of the contact arm at said opposite side of the recess,
and a third electrical conductor member (56) is mounted on the body having one end connected to the first contact at said one side of the recess and having an opposite terminal end (54) extending from the body, and
the heater (58) disposed in the recess having opposite ends thereof extending through said recess side wall opening and respectively connected to said one end of the first and second conductor members electrically connecting the heater, the conductors, the movable contact arm, and the first contact in series relation with each other.

21. A motor protector according to claim 20 further characterized in that said one ends of the first and second electrical conductor members (48,52) are electrically connected to respective opposite ends of the heater (58) by laser welds.

22. A motor protector according to claim 20 further characterized in that the first and second electrical conductor members (48,52) are mounted on the body with said one ends thereof extending over respective body openings and welded to said respective conductor members ends at the location of said openings.

23. A motor protector according to claim 22 further characterized in that resistance weld projections are provided on said one ends of the first and second electrical conductor members (48,52) at the location of said body openings and the opposite ends of the heater engage weld projections over the body openings, said one conductor member ends being electrically connected to said respective heater ends by resistance welds at said body openings.

24. A motor protector according to any one of claims 20 to 23 further characterized in that grooves (38.9) provided in said one body side locate the respective electrical conductor members in predetermined location relative to the heater and to each other, each of the conductor members has a staking tab portion (48.3,52.4,54.3) extending into a corresponding staking opening (38.6) in the body and bent within the staking opening securing the conductor member in said predetermined locations, the first contact means (54) is mounted in predetermined location on said third conductor member (56), and the contact arm (62) has said one end thereof mounted in predetermined location on said second conductor member (52) normally extending in predetermined location over the recess to engage the first contact, the body having an adjusting opening (38.5) located beneath a portion of said second conductor member.

25. A motor protector according to any one of claims 20 to 24 wherein the first and third conductor members (48,56) are formed of cold rolled steel, one of said conductor members has a selected cross-sectional size, and the other of said conductor members has a portion of selected, relatively smaller cross-sectional size located in its respective groove intermediate the member ends.

26. A motor protector according to any one of the preceding claims wherein the heater has a selected current rating in the range from 1 to 10 ampères, and the thermostat metal member has an actuating temperature in the temperature range from 90°C to 160°C.

27. A compressor motor system having a protector according to any of the preceding claims and a compressor (20) having a shell (22) with three triangularly disposed thermally and electrically conductive pins (26.1,26.2,26.3) electrically separated from each other and from the shell, extending through the shell and electrically connected to windings of an electrical motor in the shell, the protector being arranged for use with the compressor and comprising a housing (38,39), a terminal (50) connected to one of the contact means, and a resilient, pin-receiving female clip terminal (55.2) connected to the other of the contact means, the pin-receiving female terminal having an opening disposed on one side of the protector housing with the axis of the opening extending in a direction from the bottom to the top of the housing, the housing being formed of a thermally and electrically insulating material, and having hold-down locating tab means (39.4) extending from said one side of the housing bottom.

28. A system according to claim 27 wherein the tab means (39.4) comprise a pair of tabs extending from the housing adjacent opposite ends of the housing.

29. A system according to claim 28 wherein the female clip terminal is disposed with a selected spacing from distal ends of said tabs (39.4).

30. A system according to claim 29 wherein the pair of tabs have respective grooves at the distal ends thereof disposed in facing relation to each other facing generally away from the housing.

31. A system according to claim 29 having a first terminal extending from one end of said housing and having an exterior terminal electrically connected to said one terminal extending along the protector housing supporting said female clip terminal intermediate opposite ends of the housing.

32. A system according to claim 31 having a ridge means formed on said housing extending along sides of said exterior terminal positioning the exterior terminal on the housing.

33. A system according to claim 32 wherein the housing includes base (38) and cover means (39) enclosing said switch means, and wherein said ridge means and tab means are provided on the housing cover, the cover having rod means thereon fitted into openings in the base means securing the base and cover means securely together.

## Patentansprüche

1. Auf Strom und Temperatur ansprechende Motorschutzvorrichtung, die so ausgebildet und angeordnet ist, daß sie auf spezielle Art an einem Elektromotor (18) angebracht werden kann, um bei der Verwendung einen Kurzzeit- und Grenzumschaltschutz für den Motor bereitzustellen, wobei die Schutzvorrichtung aufweist: einen Sockel (38), ein erstes, am Sockel angebrachtes Kontaktmittel (56, 54), das in der normalen, ersten Position mit einem komplementären Kontaktmittel (62) in Eingriff steht, so daß bei der Verwendung ein Versorgungsschaltkreis zu dem Motor geschlossen ist, wobei das komplementäre Kontaktmittel zu einer zweiten Position bewegbar ist, um außer Eingriff mit dem ersten Kontaktmittel zu gelangen, damit der Versorgungsschaltkreis zu dem Motor geöffnet wird, Thermostatmetallmittel (60), die ein gekrümmtes, mit Schnappwirkung arbeitendes Thermostatmetallelement mit einer ursprünglich gekrümmten Ausgestaltung und einer umgekehrt gekrümmten Ausgestaltung aufweisen, wobei sich das Element von der ursprünglich gekrümmten Ausgestaltung in die umgekehrt gekrümmte Ausgestaltung verändert, wenn es auf eine genaue Betätigungstemperatur erwärmt ist, und wobei es am Sockel so angebracht ist, daß es mit einer speziellen thermischen Kopplung mit dem Motor angeordnet ist, wenn die Schutzvorrichtung auf die spezielle Art an dem Motor angebracht ist, sowie eine elektrische Widerstandsheizeinrichtung (58), die so geschaltet ist, daß bei der Verwendung der Strom zu dem Motor durch sie läuft, und die so angeordnet ist, daß sie bei der Verwendung mit der Heizung der Thermostatmetallmittel durch den Motor zusammenwirkt, so daß es dem Element (60) ermöglicht wird, in seiner ursprünglich gekrümmten Ausgestaltung zu bleiben, wenn in der Heizeinrichtung normale Betriebsströme fließen, und daß das Thermostatmetallelement in seine umgekehrt gekrümmte Ausgestaltung bewegt wird, wenn entweder Kurzzeitauslöse- oder Grenzauslöse-Fehlermotorströme in der Heizeinrichtung (58) fließen, dadurch gekennzeichnet, daß das Thermostatmetallelement am Sockel unbefestigt an irgendeinem Träger, im wesentlichen frei von von außen aufgebrachten Kräften und außerhalb eines Motorstromkreises, so daß bei der Verwendung kein Motorstrom durch das Element fließt, sowie an einer solchen Stelle relativ zu dem komplementären Kontaktmittel (62) angeordnet ist, daß dieses außer Eingriff mit dem ersten Kontaktmittel (54, 56) gelangt, wenn das Element in seine umgekehrt gekrümmte Ausgestaltung bewegt wird.

2. Motorschutzvorrichtung nach Anspruch 1, bei welcher der Sockel (38) einen Körper aus einem thermisch und elektrisch isolierenden Material mit einer an einem Ende offenen Ausnehmung (40) aufweist, die Heizeinrichtung (58) und das Thermostatmetallelement (60) in dicht beabstandeter, thermisch gekoppelter Beziehung zueinander in der Ausnehmung (40) angeordnet sind.

3. Motorschutzvorrichtung nach Anspruch 2, bei welcher das komplementäre Kontaktmittel (62) einen elastischen, elektrisch leitenden und beweglichen Kontaktarm (62) aufweist, der mit der Heizeinrichtung (58) mit der gleichen Polarität wie diese in Reihe geschaltet ist, wobei ein Ende des Arms (62) an einer Seite der Ausnehmung (40) an dem Körper befestigt ist und sich sein entgegengesetztes Ende über das offene Ausnehmungsende zu einer entgegengesetzten Seite der Ausnehmung erstreckt, und das erste Kontaktmittel (54, 56) an dem Körper an der entgegengesetzten Seite der Ausnehmung angebracht ist und normalerweise an dem beweglichen Kontakt angreift, wobei das erste Kontaktmittel (54, 56) außerhalb der Ausnehmung (40) an einer Stelle angebracht ist, die einen geeigneten elektrischen Abstand von der Heizeinrichtung (58) aufweist, so daß es die entgegengesetzte Polarität wie die Heizeinrichtung hat, wobei der Arm (62) an einer dem Thermostatmetallelement (60) in der Ausnehmung (40) ausreichend nahen Stelle angeordnet ist, so daß der sich über die Ausnehmung erstreckenden Arm (62) außer Eingriff mit dem ersten Kontaktmittel (54, 56) gehalten wird, wenn sich das Element in seiner umgekehrt gekrümmten Ausgestaltung befindet.

4. Motorschutzvorrichtung nach Anspruch 3, bei welcher der Federarm (62) eine ausgewählte, relativ niedrige Federkonstantencharakteristik aufweist.

5. Motorschutzvorrichtung nach Anspruch 3 oder 4, ferner dadurch gekennzeichnet, daß der Kontaktarm (62) an einer Stelle zwischen seinen Enden einen Vorsprung (62.6) aufweist, der mit dem Thermostatmetallelement (60) im Eingriff steht, wenn sich das Element in seiner umgekehrt gekrümmten Ausgestaltung befindet, sowie zwischen dem Vorsprung und dem entgegengesetzten Armende eine von ihm nach oben stehende Versteifungsrippe (62.7) aufweist.

6. Motorschutzvorrichtung nach Anspruch 3, 4 oder 5, bei welcher die Heizeinrichtung (58) ein elektrisches Widerstandsheizelement aufweist, das an seinen entgegengesetzten Enden Anschlußmittel hat, die mit dem beweglichen Kontaktarm (62) bzw. dem Motorstromkreis verbunden sind, wobei die Heizeinrichtung (58) die Form einer Schleife aufweist und innerhalb der Ausnehmung (40) so angeordnet ist, daß sie sich um die Ausnehmung in dicht beabstandeter Wärmeübertragungsbeziehung zu dem Thermostatmetallelement (60) erstreckt.

7. Motorschutzvorrichtung nach Anspruch 6, bei welcher wenigstens eines der Anschlußmittel (55) der Heizeinrichtung federnde Leitungshaltemittel (55.2) aufweist.

8. Motorschutzvorrichtung nach Anspruch 6 oder 7, bei welcher sich die Körperausnehmung (40) an einer Seite des Körpers öffnet, wobei die Ausnehmung einen Boden (40.1) und eine Seitenwand sowie eine Schulter (42) in der Seitenwand aufweist, die dem offenen Ende der Ausnehmung zugewandt ist, und der Körper in der einen Körperseite an jeweils entgegengesetzten Seiten der Körperausnehmung eine erste und eine zweite Bezugsfläche (44, 46) aufweist, wobei die Heizeinrichtung an einer ausgewählten Position am Boden der Ausnehmung angebracht ist, wobei sich das an der Schulter (42) angeordnete Thermostatmetallelement (60) über der Heizeinrichtung (58) in thermischer Kopplungsbeziehung zu der Heizeinrichtung erstreckt, und das erste und das komplementäre Kontaktmittel an der ersten bzw. der zweiten Bezugsfläche in vorbestimmter Beziehung zueinander und zu dem Thermostatmetallelement in der Körperausnehmung angebracht sind.

9. Motorschutzvorrichtung nach Anspruch 8, bei welcher die Ausnehmung (40) einen Boden und Seitenwandmittel und das Heizelement (58) einen Draht aus einem Metallmaterial mit ausgewählten elektrischen Widerstandseigenschaften aufweist, der zu einer Schraubenwicklung (58a) mit ausgewählter Länge gewickelt ist.

10. Motorschutzvorrichtung nach Anspruch 8 oder 9, bei welcher der Körper (38) eine Erhebung (47) aus dem Körpermaterial aufweist, die von dem Zentrum des Ausnehmungsbodens im Inneren der Heizschleife in thermisch gekoppelter Beziehung zu der Heizschleife und zu dem Thermostatmetallelement (60) nach oben steht, wobei sich die Erhebung gut eingepaßt innerhalb der Heizschleife erstreckt und sie in einer ausgewählten Position an dem Ausnehmungsboden hält.

11. Motorschutzvorrichtung nach Anspruch 8, bei welcher die Heizeinrichtung (58) einen schlangenförmigen Abschnitt (58b) aus einem flachen Blech aus einem elektrischen Widerstandsmaterial aufweist, der so angeordnet ist, daß sich eine Flachseite über den Boden der Körperausnehmung in einem genau vorbestimmten elektrischen Abstand zu dem in der Ausnehmung angeordneten Thermostatmetallelement erstreckt.

12. Motorschutzvorrichtung nach einem der Ansprüche 3 bis 11, bei welcher der bewegliche Kontaktarm (62) über dem offenen Ausnehmungsende normalerweise das Thermostatmetallelement (60) in der Körperausnehmung im wesentlichen frei von von außen aufgebrachten Kräften in der ausgewählten thermischen Kopplung mit der Heizeinrichtung (58) in der Ausnehmung hält.

13. Motorschutzvorrichtung nach einem der Ansprüche 3 bis 12 mit einer Abdeckung (39) aus einem thermisch und elektrisch isolierenden Material, die über der Ausnehmung an dem Körper befestigt ist.

14. Motorschutzvorrichtung nach Anspruch 13, ferner dadurch gekennzeichnet, daß die sich über der Körperausnehmung (40) erstreckende Abdeckung (39) sich auch über dem beweglichen Kontaktarm (62) erstreckt, wobei die Abdeckung (39) einen Vorsprung (39.6) aufweist, der zu dem entgegengesetzten Armende an einer Stelle so nach unten ragt, daß er in einer ausgewählten, beabstandeten Beziehung zu dem entgegengesetzten Armende liegt, wenn dieses mit dem ersten Kontakt in Eingriff steht, und an dem entgegengesetzten Armende eingreift, um die Armbewegung zu begrenzen, wenn dieses außer Eingriff mit dem ersten Kontakt steht.

15. Motorschutzvorrichtung nach Anspruch 14, bei welcher die Abdeckung (39) zwei Vorsprünge (39.2) aufweist, die davon an jeweils entgegengesetzten Seiten des Kontaktarms in die Körperausnehmung nach unten ragen und jeweils angrenzend an Umfangsabschnitte des Thermostatmetallelements (60) angeordnet sind, um das Element sicher in der Körperausnehmung zu halten.

16. Motorschutzvorrichtung nach einem der vorhergehenden Ansprüche, bei welcher die Heizeinrichtung (58) eine ausgewählte Heizleistung und thermische Kopplung mit dem Thermostatmetallelement (60) aufweist, um mit der durch das Anbringen bewirkten thermischen Kopplung mit dem Motor zusammenzuwirken, um der Schutzvorrichtung ein Verhältnis von Kurzzeitauslösestrom zu Grenzauslösestrom bei einer Kurzzeitauslösung von 10 Sekunden im Bereich von 2,5 bis 4,5 zu erteilen, wenn die effektive Schutzvorrichtungsumgebungstemperatur 65° C beträgt.

17. Motorschutzvorrichtung nach Anspruch 16, bei welcher ihre Wärmekapazität für die Schutzvorrichtung eine Rückstellzeit nach dem Auslösen in Reaktion auf das Auftreten eines Kurzzeitauslöse-Motorfehlerstroms in der Heizeinrichtung von wenigstens etwa 150 Sekunden ergibt.

18. Motorschutzvorrichtung nach Anspruch 17, bei welcher die Wärmekapazität der Schutzvorrichtung bezüglich der thermischen Kopplung des Thermostatmetallelements (60) mit der Heizeinrichtung (58) so reguliert ist, daß sich für die Schutzvorrichtung kurze Auslösezeiten im Bereich von 3 bis 10 Sekunden in Reaktion auf Kurzzeitauslöse-Motorfehlerströme in dem Heizelement bei ausgewählten Motoranwendungen ergeben.

19. Motorschutzvorrichtung nach einem der vorhergehenden Ansprüche, bei welcher die elektrische Widerstandsheizeinrichtung (58) aus einem Material mit einem positiven Temperaturkoeffizienten des spezifischen Widerstandes ausgebildet ist, wobei das Material der Heizeinrichtung so ausgewählt ist, daß es in Reaktion auf normale Motorströme in der Heizeinrichtung einen ersten elektrischen Widerstand, in Reaktion auf einen Grenzauslösemotorstrom in der Heizeinrichtung einen zweiten, relativ höheren elektrischen Widerstand sowie in Reaktion auf einen Kurzzeitauslöse-Motorstrom in der Heizeinrichtung einen dritten, wesentlich höheren elektrischen Widerstand zeigt, wobei die Heizeinrichtung so dimensioniert und an einer Stelle mit einer ausgewählten thermischen Kopplung mit dem Thermostatmetallmittel angeordnet ist, daß sie den ersten Widerstand zeigt, wenn normale Motorströme in der Heizeinrichtung fließen, daß sie den zweiten Widerstand zeigt, wenn Grenzauslöseströme in der Heizeinrichtung fließen, und daß sie den dritten Widerstand zeigt, wenn ein Kurzzeitauslösestrom in der Heizeinrichtung fließt.

20. Motorschutzvorrichtung nach einem der Ansprüche 2 bis 15, bei welcher
- die Körperausnehmung (40) in der Seitenwand eine Öffnung (40.4) aufweist,
- ein erstes elektrisches Leiterelement (48) an dem Körper angebracht ist, von dem ein Ende an die Ausnehmungsseitenwandöffnung angrenzend angeordnet ist und sich ein entgegengesetztes Anschlußende von dem Körper erstreckt,
- ein zweites elektrisches Leiterelement (52) an dem Körper angebracht ist, von dem ein Ende an die Ausnehmungsseitenwandöffnung angrenzend im Abstand von dem ersten Leiterelement angeordnet ist und ein entgegengesetztes Ende mit einem Ende des Kontaktarms an der entgegengesetzten Seite der Ausnehmung verbunden ist,
- und ein drittes elektrisches Leiterelement (56) an dem Körper angebracht ist, von dem ein Ende mit dem ersten Kontakt an der einen Seite der Ausnehmung verbunden ist und sich ein entgegengesetztes Anschlußende (54) von dem Körper erstreckt, und
- die in der Ausnehmung angeordnete Heizeinrichtung (58) entgegengesetzte Enden aufweist, die sich durch die Ausnehmungsseitenwandöffnung erstrecken und mit dem einem Ende des ersten Leiterelements bzw. des zweiten Leiterelements verbunden sind, wodurch die Heizeinrichtung, die Leiter, der beweglichen Kontaktarm und der erste Kontakt miteinander in Reihe verbunden sind.

21. Motorschutzvorrichtung nach Anspruch 20, ferner dadurch gekennzeichnet, daß die einen Enden des ersten und des zweiten elektrischen Leiterelements (48, 52) durch Laserschweißstellen mit den entgegengesetzten Enden der Heizeinrichtung (58) elektrisch verbunden sind.

22. Motorschutzvorrichtung nach Anspruch 20, ferner dadurch gekennzeichnet, daß das erste und das zweite elektrische Leiterelement (48, 52) so an dem Körper angebracht sind, daß sich ihre einen Enden jeweils über Körperöffnungen erstrecken und mit den jeweiligen Leiterelementenden an der Stelle der Öffnungen verschweißt sind.

23. Motorschutzvorrichtung nach Anspruch 22, ferner dadurch gekennzeichnet, daß an den einen Enden des ersten und des zweiten elektrischen Leiterelements (48, 52) an der Stelle der Körperöffnungen Widerstandsschweißansätze vorgesehen sind und die entgegengesetzten Enden der Heizeinrichtung an Schweißansätzen über den Körperöffnungen angreifen, wobei die einen Leiterelementenden durch Widerstandsschweißstellen an den Körperöffnungen mit den jeweiligen Heizeinrichtungsenden elektrisch verbunden sind.

24. Motorschutzvorrichtung nach einem der Ansprüche 20 bis 23, ferner dadurch gekennzeichnet, daß in der einen Körperseite vorgesehene Nuten (38.9) die jeweiligen elektrischen Leiterelemente an einer vorbestimmten Stelle relativ zu der Heizeinrichtung und zueinander fixieren, wobei jedes der Leiterelemente einen Verbindungslappenabschnitt (48.3, 52.4, 54.3) aufweist, der sich in eine entsprechende Verbindungsöffnung (38.6) in dem Körper erstreckt und innerhalb der Verbindungsöffnung gebogen ist, um das Leiterelement an der vorbestimmten Stelle zu befestigen, daß das erste Kontaktmittel (54) an einer vorbestimmten Stelle an dem dritten Leiterelement (56) angebracht ist und das eine Ende des Kontaktarms (62) an einer vorbestimmten Stelle an dem zweiten Leiterelement (52) angebracht ist, das sich normalerweise an einer vorbestimmten Stelle über der Ausnehmung befindet, um an dem ersten Kontakt einzugreifen, wobei der Körper eine Einstellöffnung (38.5) aufweist, die sich unter einem Abschnitt des zweiten Leiterelements befindet.

25. Motorschutzvorrichtung nach einem der Ansprüche 20 bis 24, bei welcher das erste und das dritte Leiterelement (48, 56) aus kaltgewalztem Stahl gebildet sind, wobei eines der Leiterelemente eine ausgewählte Querschnittsgröße aufweist und das andere der Leiterelemente einen Abschnitt mit einer ausgewählten, relativ kleineren Querschnittsgröße aufweist, der sich in seiner Nut zwischen den Elementenden befindet.

26. Motorschutzvorrichtung nach einem der vorhergehenden Ansprüche, bei welcher die Heizvorrichtung einen ausgewählten Stromnennwert im Bereich von 1 bis 10 Ampère und das Thermostatmetallelement eine Betätigungstemperatur im Temperaturbereich von 90° C bis 160° C aufweist.

27. Kompressormotorsystem mit einer Schutzvorrichtung nach einem der vorhergehenden Ansprüche und einem Kompressor (20) mit einem Mantel (22) mit drei im Dreieck angeordneten, thermisch und elektrisch leitenden Stiften (26.1, 26.2, 26.3), die elektrisch voneinander und von dem Mantel getrennt sind, sich durch den Mantel erstrecken und elektrisch mit den Wicklungen eines Elektromotors in dem Mantel verbunden sind, wobei die Schutzvorrichtung zur Verwendung mit dem Kompressor angeordnet ist und ein Gehäuse (38, 39), einen mit einem der Kontaktmittel verbundenen Anschluß (50), sowie einen elastischen, stiftaufnehmenden Buchsenklemmanschluß (55.2) aufweist, der mit dem anderen der Kontaktmittel verbunden ist, wobei der stiftaufnehmende Buchsenklemmanschluß eine Öffnung aufweist, die an einer Seite des Schutzvorrichtungsgehäuses angeordnet ist und deren Achse sich in Richtung vom Boden zum Oberteil des Gehäuses erstreckt, wobei das Gehäuse aus einem thermisch und elektrisch isolierenden Material gebildet ist und Niederhalte-Fixierlappenmittel (39.4) aufweist, die sich von der einen Seite des Gehäusebodens erstrecken.

28. System nach Anspruch 27, bei welchem das Lappenmittel (39.4) zwei Lappen aufweist, die sich von dem Gehäuse angrenzend an entgegengesetzte Enden des Gehäuses erstrecken.

29. System nach Anspruch 28, bei welchem der Buchsenklemmanschluß mit einem ausgewählten Abstand von distalen Enden der Lappen (39.4) angeordnet ist.

30. System nach Anspruch 29, bei welchem die beiden Lappen an den distalen Enden Nuten aufweisen, die in einander zugewandter Beziehung allgemein von dem Gehäuse abgewandt angeordnet sind.

31. System nach Anspruch 29 mit einem ersten Anschluß, der sich von einem Ende des Gehäuses erstreckt, und einem äußeren Anschluß, der mit dem einen Anschluß elektrisch verbunden ist, der sich längs dem Gehäuse der Schutzvorrichtung erstreckt, das den Buchsenklemmanschluß zwischen entgegengesetzten Enden des Gehäuses stützt.

32. System nach Anspruch 31, mit einem an dem Gehäuse ausgebildeten Stegmittel, das sich längs der Seiten des äußeren Anschlußes erstreckt und den äußeren Anschluß an dem Gehäuse positioniert.

33. System nach Anspruch 32, bei welchem das Gehäuse eine Basis (38) und Abdeckmittel (39) umfaßt, die die Schaltmittel umschließen, und bei welchem das Stegmittel und die Lappenmittel an der Gehäuseabdeckung vorgesehen sind, wobei die Abdeckung Stabmittel aufweist, die in Öffnungen in dem Basismittel eingepaßt sind und die Basis und das Abdeckmittel sicher aneinander befestigen.

## Revendications

1. Dispositif de protection pour un moteur, sensible au courant et à la température, organisé et agencé de manière à être monté d'une manière particulière sur un moteur électrique (18) pour réaliser, en fonctionnement, une protection avec arrêt de brève durée et une protection avec arrêt définitif du moteur, le dispositif de protection comprenant : une embase (38), des premiers moyens de contact (56, 54) montés sur l'embase et coopérant avec des moyens de contact complémentaires (62), lorsqu'ils sont dans leur première position normale de sorte qu'en fonctionnement, un circuit d'alimentation du moteur est fermé, les moyens de contact complémentaires étant déplaçables dans une seconde position pour être dégagés des premiers moyens de contact pour ouvrir le circuit d'alimentation du moteur, des moyens métalliques formant thermostat (60) comprenant un élément métallique incurvé de thermostat à action brusque possédant une configuration incurvée initiale et une configuration incurvée inverse, l'élément étant commuté de la configuration incurvée initiale à la configuration incurvée inverse lorsqu'il est chauffé à une température précise d'actionnement, et étant monté sur l'embase de manière à être disposé afin de présenter un couplage thermique particulier avec le moteur lorsque le dispositif de protection est monté sur le moteur de la manière particulière, et des moyens de chauffage à résistance électrique (58) raccordés de telle sorte qu'en fonctionnement un courant envoyé au moteur traverse ces moyens, et disposés de telle sorte qu'en fonctionnement, ils coopèrent avec le chauffage des moyens métalliques formant thermostat par le moteur pour permettre à l'élément (60) de rester dans sa configuration incurvée initiale lorsque des courants de fonctionnement normaux traversent les moyens de chauffage, et amener l'élément métallique formant thermostat dans sa configuration incurvée inverse lorsque des courants de défaut du moteur provoquant un arrêt de brève durée ou un arrêt définitif circulent dans les moyens de chauffage (58), caractérisé en ce que l'élément métallique formant thermostat est monté sur l'embase, sans être fixé à aucun support et en n'étant sensiblement soumis à aucune force appliquée de l'extérieur et à l'extérieur d'un circuit du moteur de sorte qu'en fonctionnement, le courant du moteur ne traverse pas cet élément, dans une position relative par rapport aux moyens de contact complémentaires (62) pour l'amener à dégager les premiers moyens de contact (54, 56) si l'élément est amené dans sa configuration incurvée inverse.

2. Dispositif de protection d'un moteur selon la revendication 1, dans lequel l'embase (38) comprend un corps formé d'un matériau thermiquement et électriquement isolant, comportant un renfoncement (40) ouvert à une extrémité, les moyens de chauffage (58) et l'élément métallique formant thermostat (60) étant disposés selon une relation de couplage thermique avec un faible écartement relatif à l'intérieur du renfoncement (40).

3. Dispositif de protection d'un moteur selon la revendication 2, dans lequel les moyens de contact complémentaires (62) comprennent un bras de contact élastique mobile électriquement conducteur (62) branché électriquement en série avec les moyens de chauffage (58) avec la même polarité que ces moyens, le bras (62) possédant une extrémité fixée au corps, d'un côté du renfoncement (40), tandis que son extrémité opposée traverse l'extrémité ouverte du renfoncement en dirction d'un côté opposé de ce dernier, et les premiers moyens de contact (54, 56) sont montés sur le corps sur ledit côté opposé du renfoncement en s'appliquant normalement contre le contact mobile, les premiers moyens de contact (54, 56) étant montés à l'extérieur du renfoncement (40) en un emplacement situé à une distance électrique appropriée des moyens de chauffage (58) pour posséder une polarité opposée à celle de ces moyens de chauffage, le bras (62) étant disposé en un emplacement suffisamment proche de l'élément métallique formant thermostat (60) dans le renfoncement (40) pour maintenir le bras (62), qui s'étend à travers le renfoncement, dans un état écarté des premiers moyens de contact (54, 56) lorsque cet élément possède sa configuration incurvée inverse.

4. Dispositif de protection d'un moteur selon la revendication 3, dans lequel le bras élastique (62) possède une caractéristique sélectionnée de ressort relativement faible.

5. Dispositif de protection d'un moteur selon la revendication 3 ou 4, caractérisé en outre en ce que le bras de contact (62) possède un bossage (62.6) situé entre ses extrémités, en un emplacement de venue en contact avec l'élément métallique formant thermostat (60) lorsque cet élément possède sa configuration incurvée inverse, et possède une nervure de renfoncement (62.7) qui s'étend vers le haut à partir de cet élément, entre le bossage et l'extrémité opposée du bras.

6. Dispositif de protection d'un moteur selon la revendication 3 ou 4 ou 5, dans lequel les moyens de chauffage (58) comprennent un élément chauffant à résistance électrique comportant, au niveau de ses extrémités opposées, des moyens formant bornes raccordées respectivement au bras de contact mobile (62) et au circuit du moteur, les moyens de chauffage (58) possédant une forme de boucle et étant disposés à l'intérieur du renfoncement (40) de manière à s'étendre dans ce dernier en étant faiblement espacés de l'élément métallique formant thermostat (60) et dans une relation de transfert thermique avec ce dernier.

7. Dispositif de protection d'un moteur selon la revendication 6, dans lequel au moins l'un desdits moyens formant bornes (56) du dispositif de chauffage possède des moyens élastiques de serrage de conducteurs (55.2).

8. Dispositif de protection d'un moteur selon la revendication 6 ou 7, dans lequel le renfoncement (40) du corps s'ouvre d'un côté de ce dernier, le renfoncement possédant un fond (40.1) et une paroi latérale et comportant un épaulement (42) situé dans la paroi latérale en vis-à-vis de l'extrémité ouverte du renfoncement, et le corps possède des première et seconde surfaces de référence (44, 46) situées dudit côté dudit corps sur des côtés respectifs opposés du renfoncement de ce corps, les moyens de chauffage étant montés dans une position sélectionnée dans le renfoncement sur le fond de ce renfoncement, l'élément métallique formant thermostat (60) étant disposé sur l'épaulement (42) qui s'étend au-dessus des moyens de chauffage (58) en étant couplé thermiquement à ces moyens de chauffage, et les premiers moyens de contact et les moyens de contact complémentaires sont montés respectivement sur lesdites première et seconde surfaces de référence en étant dans une relation prédéterminée entre eux et par rapport à l'élément métallique formant thermostat dans le renfoncement du corps.

9. Dispositif de protection d'un moteur selon la revendication 8, dans lequel le renfoncement (40) possède un fond et des moyens formant parois latérales et l'élément de chauffage (58) comprend un fil formé d'un matériau métallique présentant des propriétés sélectionnées de résistance électrique et enroulé sous la forme d'une bobine hélicoïdale (58a) de longueur choisie.

10. Dispositif de protection d'un moteur selon la revendication 8 ou 9, dans lequel le corps (38) possède un bossage (47) formé du matériau du corps et s'élevant à partir du centre du fond du renfoncement à l'intérieur de la boucle du dispositif de chauffage en étant couplé thermiquement à la boucle de chauffage et à l'élément métallique formant thermostat (60), le bossage s'étendant d'une manière ajustée à l'intérieur de la boucle de chauffage qui le retient dans une position choisie sur le fond du renfoncement.

11. Dispositif de protection d'un moteur selon la revendication 8, dans lequel les moyens de chauffage (58) comprennent une longueur de serpentin (58b) formée d'une tôle plate d'un matériau présentant une résistance électrique et disposé de telle sorte qu'une face plane de ce matériau s'étend sur le fond du renfoncement du corps en étant séparée par une distance électrique déterminée de façon précise par rapport à l'élément métallique formant thermostat disposé dans le renfoncement.

12. Dispositif de protection d'un moteur selon l'une quelconque des revendications 3 à 11, dans lequel le bras de contact mobile (62) qui s'étend à l'extrémité ouverte du renfoncement maintient normalement l'élément métallique formant thermostat (60) dans ce renfoncement du corps, de telle sorte qu'il n'est soumis sensiblement à aucune force appliquée de l'extérieur dans son état de couplage thermique choisi avec les moyens de chauffage (58) dans le renfoncement.

13. Dispositif de protection d'un moteur selon l'une quelconque des revendications 3 à 12, comportant un capot (39) réalisé en un matériau thermiquement électriquement isolant fixé au corps par-dessus le renfoncement.

14. Dispositif de protection d'un moteur selon la revendication 13, caractérisé en outre en ce que le capot (39), qui s'étend au-dessus du renfoncement (40) du corps, s'étend également au-dessus du bras de contact mobile (62), le capot (39) possédant un bossage (39.6), qui s'étend en direction de ladite extrémité opposée du bras, en un emplacement devant être espacé d'une distance choisie par rapport à l'extrémité opposée du bras, lorsqu'elle est appliquée contre le premier contact, et à s'appliquer contre l'extrémité opposée du bras pour limiter le déplacement de ce dernier, lorsqu'elle est écartée du premier contact.

15. Dispositif de protection d'un moteur selon la revendication 14, dans lequel le capot (39) possède un couple de bossages (39.2) qui pénètrent dans le renfoncement du corps sur des côtés opposés respectifs du bras de contact, situés au voisinage de parties périphériques respectives de l'élément métallique formant thermostat (60), pour retenir de façon fixe l'élément dans le renfoncement du corps.

16. Dispositif de protection d'un moteur selon l'une quelconque des revendications précédentes, dans lequel le dispositif de chauffage (58) possède une capacité de chauffage choisie et un couplage thermique choisi avec l'élément métallique formant thermostat (60) pour coopérer avec le couplage thermique avec le moteur, fourni par ledit montage de manière à alimenter le dispositif de protection avec un rapport du courant d'arrêt à un bref intervalle de temps au courant d'arrêt définitif pour un arrêt de brève durée de 10 secondes, compris dans la gamme de 2,5 à 4,5, lorsque la température ambiante effective du dispositif de protection est égale à 65°C.

17. Dispositif de protection d'un moteur selon la revendication 16, dans lequel sa capacité thermique confère au dispositif de protection un temps de remise à l'état initial d'au moins environ 150 secondes, qui suit un arrêt en réponse à l'apparition d'un courant de défaut du moteur déclenchant un arrêt de brève durée, dans le dispositif de chauffage.

18. Dispositif de protection d'un moteur selon la revendication 17, dans lequel la capacité thermique du dispositif de protection est réglée en rapport avec un couplage thermique de l'élément métallique formant thermostat (60) auxdits moyens de chauffage (58) pour régler dans le dispositif de protection des durées brèves de déclenchement d'arrêt dans la gamme de 3 à 10 secondes en réponse à des courants de défaut du moteur déclenchant un arrêt de brève durée, circulant dans l'élément de chauffage, dans des applications sélectionnées du moteur.

19. Dispositif de protection d'un moteur selon l'une quelconque des revendications précédentes, dans lequel les moyens de chauffage à résistance électrique (58) sont réalisés en un matériau possédant un coefficient de température de résistance positif, le matériau des moyens de chauffage étant choisi de manière à présenter une première résistance électrique en réponse à des courants normaux du moteur dans les moyens de chauffage, une seconde résistance électrique relativement plus élevée en réponse à un courant du moteur déclenchant un arrêt définitif, dans les moyens de chauffage, et une troisième résistance électrique sensiblement supérieure en réponse à un courant du moteur déclenchant un arrêt de brève durée, dans les moyens de chauffage, les moyens de chauffage étant proportionnés et disposés à un emplacement présentant un couplage thermique sélectionné avec les moyens métalliques formant thermostat pour présenter ladite première résistance lorsque des courants normaux du moteur circulent dans les moyens de chauffage, pour présenter ladite seconde résistance lorsque des courants d'arrêt définitifs circulent dans les moyens de chauffage, et pour présenter ladite troisième résistance lorsqu'un courant d'arrêt de brève durée circule dans les moyens de chauffage.

20. Dispositif de protection d'un moteur selon l'une quelconque des revendications 2 à 15, dans lequel :
le renfoncement (40) du corps possède une ouverture (40.4) ménagée dans sa paroi latérale,
un premier élément conducteur électrique (48) est monté dans le corps et une première de ses extrémités est disposée au voisinage de l'ouverture de la paroi latérale du renfoncement, tandis qu'une extrémité opposée formant borne s'étend hors du corps,
un second élément conducteur électrique (52) est monté sur le corps de telle sorte qu'une première de ses extrémités est disposée au voisinage de l'ouverture de la paroi latérale du renfoncement, en étant espacée du premier élément conducteur et possède une extrémité opposée raccordée à une première extrémité du bras de contact, sur ledit premier côté opposé du renfoncement, et
un troisième élément conducteur électrique (56) est monté sur le corps et comporte une première extrémité raccordée au premier contact sur ledit premier côté du renfoncement et une extrémité opposée formant borne (54) s'étendant à partir du corps, et
le dispositif de chauffage (58) disposé dans le renfoncement et dont les extrémités opposées traversent ladite ouverture de la paroi latérale du renfoncement et sont raccordées respectivement à ladite première extrémité des premier et second éléments conducteurs raccordant électriquement entre eux selon un circuit série le dispositif de chauffage, les conducteurs, le bras de contact mobile et le premier contact.

21. Dispositif de protection d'un moteur selon la revendication 20, caractérisé en outre en ce que lesdites premières extrémités des premier et second éléments conducteurs électriques (48, 52) sont raccordées électriquement à des extrémités opposées respectives du dispositif de chauffage (58), par des soudures au laser.

22. Dispositif de protection d'un moteur selon la revendication 20, caractérisé en outre en ce que les premier et second éléments conducteurs électriques (48, 52) sont montés sur le corps de telle sorte que leurs dites premières extrémités s'étendent au-dessus d'ouvertures respectives du corps et sont soudées auxdites extrémités des éléments conducteurs respectifs, à l'emplacement desdites ouvertures.

23. Dispositif de protection d'un moteur selon la revendication 22, caractérisé en outre en ce que des saillies de soudure à résistance sont prévues sur lesdites premières extrémités des premier et second éléments conducteurs électriques (48, 52), au niveau desdites ouvertures du corps, et que les extrémités opposées du dispositif de chauffage s'appliquent contre les saillies de soudure au-dessus des ouvertures du corps, les extrémités dudit premier élément conducteur étant raccordées électriquement auxdites extrémités respectives du dispositif de chauffage par des soudures résistives, au niveau desdites ouvertures du corps.

24. Dispositif de protection d'un moteur selon l'une quelconque des revendications 20 à 23, caractérisé en outre en ce que des rainures (38.9) ménagées dans ledit premier côté du corps positionnent les éléments conducteurs électriques respectifs dans une position prédéterminée par rapport au dispositif de chauffage et les uns par rapport aux autres, chacun des éléments conducteurs possède une partie en forme de patte d'accrochage (48.3, 52.4, 54.3) qui pénètre dans une ouverture d'accrochage correspondante (38.6) dans le corps et est coudée à l'intérieur de l'ouverture d'accrochage en fixant l'élément conducteur dans lesdites positions prédéterminées, les premiers moyens de contact (54) sont montés dans un emplacement prédéterminé sur ledit troisième élément conducteur (56), et ladite première extrémité du bras de contact (62) est montée dans un emplacement prédéterminé sur ledit second élément conducteur (52) qui s'étend normalement dans une position prédéterminée au-dessus d'un renfoncement de manière à s'appliquer contre le premier contact, le corps possédant une ouverture d'ajustement (38.5) situé au-dessous d'une partie dudit second élément conducteur.

25. Dispositif de protection d'un moteur selon l'une quelconque des revendications 1 à 24, dans lequel les premier et troisième conducteurs (48, 56) sont réalisés en un acier laminé à froid, l'un desdits éléments conducteurs possède une section transversale ayant des dimensions sélectionnées, et l'autre desdits éléments conducteurs possède une partie qui possède une section transversale relativement ayant des dimensions sélectionnées plus petites et située dans sa rainure entre les extrémités dudit élément.

26. Dispositif de protection d'un moteur selon l'une quelconque des revendications précédentes, dans lequel le dispositif de chauffage possède un courant nominal sélectionné situé dans la gamme de 1 à 10 ampères, et l'élément métallique formant thermostat possède une température d'actionnement se situant dans la gamme de températures allant de 90° à 160°C.

27. Système de moteur d'un compresseur comportant un dispositif de protection selon l'une quelconque des revendications précédentes et un compresseur (20) possédant une coque (22) pourvue de trois broches thermiquement et électriquement conductrices (26.1, 26.2, 26.3), qui sont disposées en triangle et sont séparées électriquement les unes des autres et de la coque et traversent la coque et sont raccordées électriquement aux enroulements d'un moteur électrique situé dans la coque, le dispositif de protection étant agencé de manière à être utilisé avec le compresseur et comprenant un boîtier (38, 39), une borne (50) raccordée à l'un des moyens de contact, et une borne en forme de pince femelle élastique (55.2) logeant une broche et raccordée à l'autre des moyens de contact, la borne femelle logeant la broche comportant une ouverture située d'un côté du boîtier du dispositif de protection et son axe se situant dans une direction s'étendant du fond vers la partie supérieure du boîtier, le boîtier étant formé d'un matériau thermiquement et électriquement isolant et comportant des moyens en forme de pattes de positionnement et de verrouillage (39.4) qui s'étendent à partir dudit côté du fond du boîtier.

28. Système selon la revendication 27, dans lequel les moyens en forme de pattes (39.4) comprennent un couple de pattes s'étendant à partir du boîtier au voisinage d'extrémités opposées de ce dernier.

29. Système selon la revendication 28, dans lequel la borne formant pince femelle est séparée par une distance sélectionnée, d'extrémités distales desdites pattes (39.4).

30. Système selon la revendication 29, dans lequel les deux pattes comprennent des rainures respectives situées au niveau de leurs extrémités distales et disposées en vis-à-vis l'une de l'autre en étant tournées d'une manière générale à l'opposé du boîtier.

31. Système selon la revendication 29, comportant une première borne qui s'étend à partir d'une extrémité dudit boîtier et possède une borne extérieure raccordée électriquement à ladite première borne qui s'étend le long du boîtier du dispositif de protection en supportant ladite borne formant pince femelle entre des extrémités opposées du boîtier.

32. Système selon la revendication 31, comportant des moyens en forme de nervures situés sur ledit boîtier et s'étendant le long de côtés de ladite borne extérieure de manière à positionner cette dernière sur le boîtier.

33. Système selon la revendication 32, dans lequel le boîtier comprend des moyens formant embase (38) et des moyens formant capot (39) entourant lesdits moyens de commutation, et dans lequel lesdits moyens formant nervures et lesdits moyens formant pattes sont prévus sur le capot du boîtier, ce capot possédant des moyens en forme de tiges qui sont insérées dans des ouvertures ménagées dans les moyens formant embase en fixant fermement entre eux les moyens formant embase et les moyens formant capot.
